# EUROPEAN PATENT APPLICATION

(11) **EP 3 375 508 A1**
(43) Date of publication of application: **19.09.2018**
(21) Application number: 17177485.4
(22) Date of filing: 22.06.2017
(51) Int. Cl.: B01D 53/50

(54) **METHOD AND APPARATUS FOR EFFECTIVELY REMOVING SULFUR OXIDES AND DUST IN GAS BY AMMONIA-BASED PROCESS**

(30) Priority: 15.03.2017 CN 201710154157
(71) Applicant: Jiangnan Environmental Protection Group Inc., Grand Cayman (KY)
(72) Inventor: LUO, Jing, NANJING, 211100 (CN); XU, Changxiang, NANJING, 211100 (CN)
(74) Representative: Bottero, Carlo

(57) **Abstract**

This invention belongs to the technical field of environmental protection, and particularly to a method and apparatus for effectively removing sulfur oxides and dust in gas by ammonia process. The invention further relates to a method and apparatus for effectively removing sulfur oxides and dust in gas by ammonia process, characterized in that the apparatus uses segmented control and multipoint ammonia-feeding process to fundamentally control ammonia slip and aerosol formation to achieve an effective effect of desulfurization and de-dusting.

## Description

### TECHNICAL FIELD

This invention belongs to the technical field of environmental protection, and particularly to a method and apparatus for effectively removing sulfur oxides and dust in gas by ammonia process.

### BACKGROUND ART

At present, the limestone-gypsum method is the mainstream process for removing sulfur dioxide in gas in the world. This method generates a large amount of waste water and gypsum residues in the process of desulfurization. 0.7 ton of carbon dioxide is generated for removing 1 ton of sulfur dioxide. The treatment of these waste water and residues requires high capital and operating costs. Whereas ammonia desulfurization does not generate waste water or residue, and ammonia as the de-sulfurizing agent added is converted to an ammonium sulfate fertilizer. This makes waste profitable, and sales revenue of the ammonium sulfate fertilizer is typically greater than the purchase cost of ammonia. However, the popularization and the application of this advanced technique has been limited for a long period of time, due to such problems as ammonia slip, aerosol, etc., presented in ammonia desulfurization. This invention has fundamentally eliminated ammonia slip and aerosol formation by an innovative design of the process, and the significant technical challenge which hinders the development and the popularization of ammonia desulfurization has been thoroughly solved. It can attain SO2 ≤ 35mg/Nm3, total dust (including aerosol) ≤ 5mg/Nm3, and ammonia slip ≤ 2mg/Nm3 in clean flue gas; meanwhile, the structural design of the absorber is simpler and the capital expenses less.

Jiangsu New Century Jiangnan Environmental Protection Inc. (JNEP) began to develop ammonia desulfurization since 1998 and has since established more than 300 sets of ammonia desulfurization apparatuses, comprising 80% of ammonia desulfurization market share in China and, and is the advocator and leader in ammonia desulfurization. This company is devoted to the development of ammonia desulfurization technology, a technique continuously progressing. Technical challenges such as ammonia slip, aerosol formation, etc., have been fundamentally solved, and this technique has been evolved to the fourth generation. By using this technique, under the conditions that the concentration of SO2 ≤ 30,000 mg/Nm3 and the concentration of total dust ≤ 50 mg/Nm3 in raw flue gas, it can reach SO2 ≤ 35 mg/Nm3, total dust (including aerosol) ≤ 5 mg/Nm3, and ammonia slip ≤ 2 mg/Nm3 in clean flue gas. This company disclosed two patents of methods of removing SO2 in coal-fired flue gas (CN 1283346C and CN 1321723C) in 2003, which proposed requirements for parameters of cooling de-dusting and absorption desulfurization, and for concentration of SO2 in tail gas to be less than 100 mg/Nm3. However, the ammonia slip in tail gas reached to 12 mg/Nm3, no attention was paid to the discharge of aerosol, and the recovery rate of ammonia was low. In response, this company disclosed "Process and apparatus of ammonia desulfurization with crystallization in tower"(CN100428979C) in 2005, in which a absorber was designed to a multi-sectional structure, which were sequentially an oxidation section, a crystallization section, a cooling absorption section, a main absorption section, a dehydration demisting section. By these innovations, crystallization was performed by using the capability of evaporation of flue gas so as to reduce the operational energy consumption of the apparatus. The concentration of SO2 in discharged tail gas was less than 200mg/Nm3, the content of ammonia in tail gas was up to 3mg/Nm3, and the ammonium sulfate fertilizer as the byproduct satisfies the requirement of first-grade products of GB535 standard. The ammonia recovery was greatly increased, but the discharge amount of aerosol was still large. This company later disclosed "Apparatus and method for controlling fine particulates in de-sulfurized flue gas" (CN103301705B) in 2013, which disclosed a method and apparatus for flue gas demisting and water washing demisting after absorption. Fine particulates may be effectively removed. An absorption demister removed most of liquid droplets greater than 10µm, and gas with large droplets removed was passed to water washing de-dusting, fine particulates grew into large particulates after water washing and were removed. The removal efficiency of fine particulates and dust may be 60% or more. Although this technique may efficiently remove fine particulates, the ultralow emission index in China requires that total dust (including aerosol) <10mg/Nm3, and the de-dusting efficiency is required to be further improved.

On the basis of the 4 core patents described above and 64 other auxiliary patents, this company continues to tackle key problems against the significant technical challenge of ammonia slip and aerosol within this invention, by thoroughly diverting the technical focus from how to eliminate generated ammonia slip and aerosol to innovative investigation of the process of absorption, eradicating ammonia slip and aerosol formation. By technical means such as segmented control, multipoint ammonia-feeding, etc., discharged gas after treatment meet the requirements that SO2 ≤ 35mg/Nm3, total dust (including aerosol) ≤ 5mg/Nm3, and ammonia slip ≤ 2mg/Nm3. The technique of this invention has been verified by industrial tests.

### SUMMARY OF THE INVENTION

This invention is directed to the fact that the prior art does not grasp the key point of ammonia-based desulfurization techniques, and in which it does not solve the significant technical challenges of ammonia slip and aerosol from the source of formation but only focus on how to eliminate slipped ammonia and formed aerosol. This results in the increase of number of sections within the absorber and the complication of the system. It not only leads to poorer treatment effect, but also to substantial increase of capital and operating costs. On the basis of systematic investigation of ammonia desulfurization techniques, this invention focuses on reasons for ammonia slip and aerosol formation and uses techniques of segmented control and multipoint ammonia-feeding so as to fundamentally solve these problems. Thus, the technique of this invention is formed. It is attain SO2 ≤ 35mg/Nm3 and total dust (including aerosol) ≤ 5mg/Nm3, ammonia slip ≤ 2mg/Nm3, and ammonia recovery rate ≥ 99% in clean flue gas subject to desulfurization de-dusting by using the method of this invention. Furthermore, the process flow is simple, the investment is low, the degree of automation is high, the byproduct is qualified, no waste water is discharged, there is not any secondary pollution, and synergistic control of various pollutants can be achieved.

Finally, this invention solves the technical problems described above by the following technical solutions.

A method and apparatus for effectively removing sulfur oxides and dust in gas by ammonia process, characterized as follows. The apparatus uses segmented control and multipoint ammonia-feeding process to fundamentally control ammonia slip and aerosol formation so as to achieve an effective effect of desulfurization and de-dusting. Under the conditions that the concentration of SO2 ≤ 30,000mg/Nm3 and the concentration of total dust ≤ 50mg/Nm3 in raw flue gas, it can be attain SO2 ≤ 35mg/Nm3, total dust (including aerosol) ≤ 5mg/Nm3, and ammonia slip ≤ 2mg/Nm3 in clean flue gas. The apparatus consists of a gas cleaning and pollutant removing system, an oxidation system, an ammonium sulfate post-treatment system, an ammonia supply system, and an auxiliary system.

The gas cleaning and pollutant removing system uses segmented control and is mainly divided into a pre-washing section, an absorption section, and a fine particulate control section, and each of the pre-washing section, the absorption section, and the fine particulate control section is provided with a plurality of spray layers, the pre-washing section concentrates a circulating washing liquid while reducing the temperature of flue gas, and the absorption section absorbs and removes sulfur dioxide in flue gas. Absorption solutions with different compositions are used in respective sections so as to control ammonia slip and aerosol formation in respective sections.

The gas cleaning and pollutant removing system uses multipoint ammonia-feeding and has sufficient reaction to prevent ammonia slip and aerosol formation. An ammonia-containing desulfurizing agent is added from a plurality of points, including the upper layer, the intermediate layer, and the lower layer of an oxidation tank of the oxidation system, the pre-washing section, absorption spray layers, and inlets and outlets of respective recirculation pumps. A mixing structure or apparatus may be provided at each ammonia-feeding point and a mixer exclusively used for liquid ammonia is provided when anhydrous ammonia is directly added to a solution to achieve multipoint ammonia-feeding and sufficient reaction and prevent ammonia slip and aerosol formation. The absorption circulation liquid of the absorption section has a pH value greater than 4.6. The circulating washing liquid of the pre-washing section has a pH value less than 5.5 for the crystallization process inside the absorber, and the circulating washing liquid of the pre-washing section has a pH value less than 6 for crystallization process outside the absorber.

The oxidation system is layered according to the requirement for segmented control, the a replenishing liquid and an absorption circulation liquid of the pre-washing section are withdrawn from different positions of the oxidation tank of the oxidation system, and 2 to 8 layers of gas-liquid dispersion enhancers are provided in the oxidation tank so as to both ensure absorption efficiency and control ammonia slip and aerosol formation. The gas-liquid dispersion enhancer may employ a form of any one of a structured packing, random packing, a perforated plate, a bubble cap, an aeration head, and the like or a combined form thereof. The oxidation tank and the pre-washing recirculation tank are respectively placed at the lower part of the tower or outside the tower as needed. The liquid level of the oxidation tank is greater than 5 meters, oxidizing air is excessive by 20% or more, the net residence time of the solution is greater than 20 minutes, the oxidation ratio of the absorption circulation liquid is greater than 90%, and the oxidation ratio of the circulating washing liquid of the pre-washing section is greater than 92%.

The fine particulate control section is provided with a demister, each layer of the pre-washing section and the absorption section is provided with a demister as needed; and the demister employs a form of a baffle plate, a ridge, packing, or wire mesh, or a combined form thereof.

The process flow used by the apparatus is as follows:
flue gas enters from a pre-washing section of a gas cleaning and pollutant removing system and is cooled and washed by a circulating washing liquid of the pre-washing section, while the circulating washing liquid of the pre-washing liquid is concentrated and the flue gas is further passed through an absorption section for desulfurization by washing with an absorption circulation liquid and a fine particulate control section for fine particulates removal by a fine particulate circulating washing liquid before being discharged;
the circulating washing liquid of the pre-washing section is replenished from an absorption circulation liquid, the absorption circulation liquid is replenished from a circulating washing liquid of the fine particulate control section, and process water is mainly replenished from the fine particulate control section; and
the absorption circulation liquid is oxidized in the oxidation system, and solutions with different oxidation ratios are withdrawn from different positions of the oxidation tank of the oxidation system for circulating absorption.

The liquid-to-gas ratio of each layer of the absorption section is no less than 0.2 L/m3, and the spray coverage is no less than 110%. The liquid-to-gas ratio of each layer of the fine particulate control section is no less than 0.1 L/m3, and the spray coverage is no less than 100%.

The superficial gas velocity of the absorber is 1 m/s to 5m/s;
and/or the operational temperature of the pre-washing section is 35°C to 80°C; and/or the operational temperature of the absorption section is 30°C to 70°C; and/or the operational temperature of the fine particulate control section is 30°C to 65°C.

The circulating washing liquid of the pre-washing section is concentrated (crystallized) in the pre-washing section or is subject to evaporative crystallization outside the absorber, and is processed into a commercial ammonium sulfate by an ammonium sulfate post-treatment system. An integrated drying tower is used to directly produce ammonium sulfate from a part of the circulating washing liquid of the pre-washing section when it is required to control harmful ions such as chloride, fluoride, and the like in the solution.

In this system, under the condition that the concentration of SO2 ≤ 30,000mg/Nm3 and the concentration of total dust ≤ 50mg/Nm3 in raw flue gas, it can attain SO2 ≤ 35mg/Nm3 and total dust (including aerosol) ≤ 5mg/Nm3, ammonia slip ≤ 2mg/Nm3, and ammonia recovery ≥ 99% in clean flue gas.

This invention has positive and progressive effects as follows.
1. Total dust (containing aerosol) and SO2 in flue gas treated by using the method of this invention satisfies the ultralow emission requirements, which are, SO2 ≤ 35mg/Nm3 and total dust (including aerosol) ≤ 5mg/Nm3 in clean flue gas. The clean flue gas can be discharged via a chimney at the top of an absorber or return to the existing stack for discharge.
2. Free ammonia ≤ 2mg/Nm3 in flue gas treated by using the method of this invention, and the recovery and utilization of ammonia is 99% or more.
3. The quality of ammonium sulfate as a byproduct satisfies GB535 standard.
4. The method of this invention has a simple process flow, low energy consumption, no discharge of waste water, no secondary pollution, synergistic control of various pollutants such as SO2, dust, SO3, free ammonia, etc., can be achieved and the capital and operating costs can be reduced.

### BRIEF DESCRIPTION OF THE DRAWINGS

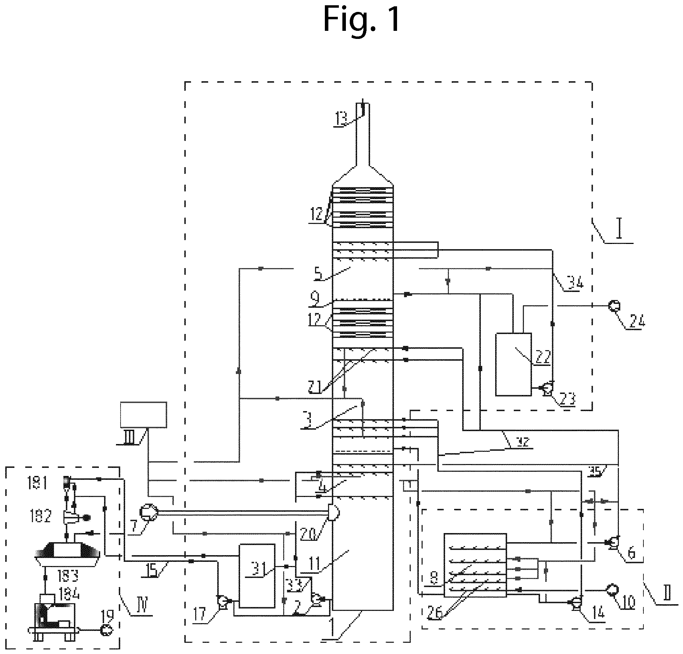

Fig. 1 is a schematic diagram of an apparatus and method.

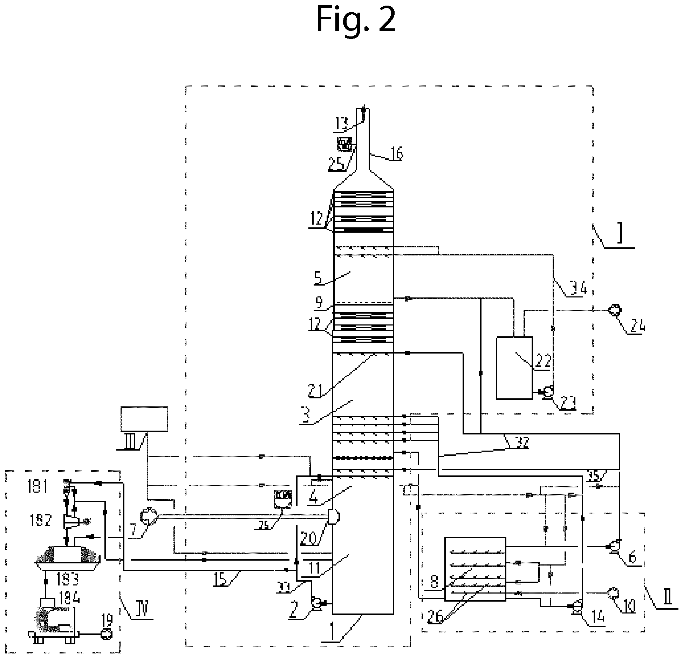

Fig.2 is a schematic diagram of the apparatus and method of Example 1.

### Description of reference numerals:

I. gas cleaning and pollutant removing system; II. oxidation system; III. ammonia supply system; IV. ammonium sulfate post-treatment system; 1. absorber; 2. pre-washing recirculation pump; 3. absorption section; 4. pre-washing section; 5. fine particulate control section; 6. upper-layer absorption recirculation pump; 7. raw flue gas; 8. oxidation tank; 9. bubble cap tray; 10. oxidation air; 11. pre-washing recirculation tank; 12. demister; 13. clean flue gas; 14. lower-layer absorption recirculation pump; 15. ammonium sulfate slurry; 16. flue gas outlet; 17. crystallization pump; 181. primary solid-liquid separation; 182. secondary solid-liquid separation; 183. integrated drying tower; 184. packaging machine; 19. commercial ammonium sulfate; 20. flue gas inlet; 21. spray layer; 22. recirculation tank of fine particulate control section; 23. recirculation pump of fine particulate control section; 24. process water; 25. continuous emission monitoring system (CEMS); 26. gas-liquid dispersion enhancer; 31. evaporative crystallization system; 32. absorption circulation liquid; 33. circulating washing liquid of pre-washing section; 34. circulating washing liquid of fine particulate control section; 35. replenishing liquid of pre-washing section.

### DESCRIPTION OF EMBODIMENTS

This invention will be further illustrated below by way of Example, but this invention will not be thus limited to the scope of the Example. The experimental method without specific conditions demonstrated in the following Example will be selected according to conventional methods and conditions or according to instructions of the merchandise.

### Preferred embodiments

Segmented control and multipoint ammonia-feeding process are used to fundamentally control ammonia slip and aerosol formation so as to achieve an effective effect of desulfurization and de-dusting. Under the condition that the concentration of SO2 ≤ 30,000mg/Nm3 and the concentration of total dust ≤ 50mg/Nm3 in raw flue gas, it can reach SO2 ≤ 35mg/Nm3, total dust (including aerosol) ≤ 5mg/Nm3, and ammonia slip ≤ 2mg/Nm3 in clean flue gas.

The apparatus comprises a gas cleaning and pollutant removing system I, an oxidation system II, an ammonium sulfate post-treatment system III, an ammonia supply system IV, and an auxiliary system.

The gas cleaning and pollutant removing system I comprises an absorber 1, an evaporative crystallization system 31 (optional), a recirculation tank 22 of a fine particulate control section, a recirculation pump 23 of a fine particulate control section, and a pre-washing recirculation tank 11. The oxidation system II comprises an oxidation tank 8, an upper-layer absorption recirculation pump 6, and a lower-layer absorption recirculation pump 14. The ammonium sulfate post-treatment system III comprises primary solid-liquid separation 181, secondary solid-liquid separation 182, an integrated drying tower 183, and a packaging machine 184. The oxidation tank 8 and the pre-washing recirculation tank 11 are respectively placed at the lower part of the tower or outside the absorber as needed.

The absorber 1 of the gas cleaning and pollutant removing system I uses segmented control and is divided into a pre-washing section 4, an absorption section 3, and a fine particulate control section 5. Each of the pre-washing section 4, the absorption section 3, and the fine particulate control section 5 is provided with a plurality of spray layers 21, the pre-washing section 4 concentrates a circulating washing liquid 33 while reducing the temperature of raw flue gas 7, the absorption circulation liquid 32 of the absorption section 3 absorbs and removes sulfur dioxide in flue gas, and the fine particulate control section 5 removes fine particulates. Absorption liquids with different compositions are used in respective sections so as to control ammonia slip and aerosol formation.

Multipoint ammonia-feeding is used and the reaction is sufficient so as to prevent ammonia slip and aerosol formation. An ammonia-containing desulfurizing agent is added from a plurality of points, including the upper layer, the intermediate layer, or the lower layer of the oxidation tank 8 (absorption recirculation tank), the pre-washing section 4, the spray layers of the absorption section 3, and inlets and outlets of respective recirculation pumps.

The process flow used by the apparatus is as follows.

Raw flue gas 7 enters from a pre-washing section 4 of an absorber 1 of a gas cleaning and pollutant removing system I and is cooled and washed by a circulating washing liquid 33 of the pre-washing section, while the circulating washing liquid 33 of the pre-washing section is concentrated and the flue gas is further passed through an absorption section 3 for desulfurization by washing with absorption circulation liquid 32 and a fine particulate control section 5 for removing fine particulates by washing with a circulating washing liquid of the fine particulate control section 34 and demisting respectively before being discharged.

The circulating washing liquid 33 of the pre-washing section is replenished from an absorption circulation liquid 32, the absorption circulation liquid 32 is replenished from a circulating washing liquid 34 of the fine particulate control section, and process water 24 is replenished from the recirculation tank 22 of the fine particulate control section 5.

The absorption circulation liquid 32 is oxidized in the oxidation tank 8. The majority of the solution is withdrawn from the upper part of the oxidation tank 8 and pumped back to the upper part of the absorption section 4 of the absorber 1 for circulating absorption and the minority is used as the replenishing liquid 35 of the pre-washing section, and solution withdrawn from the lower part is pumped to the lower part of the absorption section 4 of the absorber 1 for circulating absorption.

The circulating washing liquid 33 of the pre-washing section is concentrated and crystallized in the pre-washing section 4 or the concentrated solution is crystallized in an evaporative crystallization system 31 outside the absorber, and the slurry is then processed into a commercial ammonium sulfate 19 by an ammonium sulfate post-treatment system IV through a primary solid-liquid separator 181, a secondary solid-liquid separator 182, an integrated dryer drying tower 183, and a packaging machine 184. At the meanwhile, 0.5% of the circulating washing liquid 33 of the pre-washing section is directly delivered to the integrated drying tower for drying, and the total content of chlorine and fluorine in the circulating liquid in the apparatus is controlled to be ≤ 30,000 mg/L. The mother liquor from solid-liquid separation is returned to the evaporative crystallization system.

A plurality of layers of demisters 12 are provided in the fine particulate control section 5 and the absorption section 3. The demister 12 employs a form of a baffle plate, a ridge, or wire mesh, or a combined form thereof.

A mixing structure is provided at each ammonia-feeding point to achieve multipoint ammonia-feeding and sufficient reaction and prevent ammonia slip and aerosol formation. The pH values of the absorption circulation liquid 32 of the absorption section 3 are 4.6 to 5.8 at the upper part and 5.2 to 6.4 at the lower part. The pH value of the circulating washing liquid 33 of the pre-washing section 4 is 5 to 5.4.

2 to 8 layers of gas-liquid dispersion enhancers 26 are provided in the oxidation tank 8, and the gas-liquid dispersion enhancer employs a structured packing and a perforated plate. The liquid level of the oxidation tank 8 is greater than 5 meters, oxidation air is excessive by more than 20%, the net residence time of the solution ≥ 20 minutes, the oxidation ratio of the absorption circulation liquid 32 ≥ 90%, and the oxidation ratio of the circulating washing liquid 33 of the pre-washing section ≥ 92%.

The liquid-to-gas ratio of an absorption liquid in each layer of the absorption section 3 is no less than 0.2 L/m3, and the spray coverage is no less than 110%. The liquid-to-gas ratio of a distribution liquid in each layer of the fine particulate control section 5 is no less than 0.1 L/m3, and the spray coverage is no less than 100%.

The superficial gas velocity of the absorber is 1 m/s to 5m/s;
and/or the operational temperature of the pre-washing section 4 is 35°C to 80°C; and/or the operational temperature of the absorption section 3 is 30°C to 70°C; and/or the operational temperature of the fine particulate control section 5 is 30°C to 65°C.

### Example 1

### 1. An apparatus for effectively removing sulfur oxides and dust in gas by ammonia-based process

The apparatus comprises a gas cleaning and pollutant removing system I, an oxidation system II, an ammonium sulfate post-treatment system III, an ammonia supply system IV and an auxiliary system.

The gas cleaning and pollutant removing system I comprises an absorber 1, a recirculation tank 22 of a fine particulate control section, a recirculation pump 23 of a fine particulate control section, and a pre-washing recirculation tank 11. The oxidation system II comprises an oxidation tank 8, an upper-layer absorption recirculation pump 6, and a lower-layer absorption recirculation pump 14. The ammonium sulfate post-treatment system III comprises primary solid-liquid separation 181, secondary solid-liquid separation 182, an integrated drying tower 183, and a packaging machine 184.

The absorber 1 of the gas cleaning and pollutant removing system I uses segmented control and is divided into a pre-washing section 4, an absorption section 3, and a fine particulate control section 5. The pre-washing section 4, the absorption section 3, and the fine particulate control section 5 is provided with 2/5/2 spray layers 21 respectively, the pre-washing section 4 concentrates a circulating washing liquid 33 while reducing the temperature of raw flue gas 7, and the absorption section 3 absorbs and removes sulfur dioxide in flue gas so as to control ammonia slip and aerosol formation. The fine particulate control section 5 controls fine particulates.

Multipoint ammonia-feeding is used and the reaction is sufficient so as to prevent ammonia slip and aerosol formation. An ammonia-containing desulfurizing agent is added from the upper layer and the lower layer of the oxidation tank 8, the pre-washing section 4, the pre-washing recirculation tank 11, the inlets and the outlets of upper-layer/lower-layer absorption recirculation pumps 6/14, and the outlet of the pre-washing recirculation pump 2.

CEMSs 25 are mounted at a flue gas inlet 20 and a flue gas outlet 16. The CEMS at the flue gas inlet detects flue gas in terms of temperature, pressure, flow rate, nitrogen oxides concentration, sulfur dioxide concentration, water content, oxygen content, and dust content. The CEMS at the flue gas outlet detects flue gas in terms of temperature, pressure, flow rate, nitrogen oxides concentration, sulfur dioxide concentration, water content, oxygen content, free ammonia content, and dust content.

The liquid-to-gas ratio in each layer of a liquid distributor in the absorption section 3 is 1.2 L/m3, the spray coverage is 125%, and the total spray coverage of the absorption section is no less than 500%.

The liquid-to-gas ratio in each layer of the fine particulate control section 5 is 1.1 L/m3, and the spray coverage is 140%.

2 layers of demisters 12 are provided at the upper part of the absorption section 3, and the demisters employ 1 layer of a ridge plus 1 layer of a baffle plate. 3 layers of demisters are provided at the upper part of a demisting section of the fine particulate control section 5, and the demisters employ 2 layers of ridges plus 1 layer of a wire mesh.

**Table 1 Apparatus Design Parameters**

| No. | Process Index | Unit | Value |
|---|---|---|---|
| 1 | Amount of boiler flue gas | Nm3/h | 510000 |
| 2 | Temperature at flue gas inlet | °C | 130-150 |
| 3 | SO2 concentration of flue gas | mg/Nm3 | 4500 |
| 5 | Dust concentration at flue gas inlet | mg/Nm3 | ≤20 |
| 6 | SO2 concentration of flue gas at outlet | mg/Nm3 | <35 |
| 7 | Dust concentration of flue gas at outlet | mg/Nm3 | ≤5 |
| 8 | Ammonia recovery and utilization | % | ≥ 99 |

### 2. A method for effectively removing sulfur oxides and dust in gas by ammonia process

The process flow thereof is as follows.

Raw flue gas 7 enters a pre-washing section 4 of a gas cleaning and pollutant removing system 1 from a flue gas inlet 20 and is brought into countercurrent contact with a circulating washing liquid 33 of the pre-washing section to remove dust, SO3, and a part of SO2 in flue gas, then enters an absorption section 3 and is brought into countercurrent contact with an absorption circulation liquid 32 to allow SO2 in flue gas to be absorbed, and further enters a fine particulate control section 5 to remove a small amount of free ammonia and aerosol in flue gas as well as atomized droplets, and finally clean flue gas 13 is directly discharged from a flue gas outlet 16 at the top of the tower.

The absorption circulation liquid is under the oxidation of compressed air 10, and sulfites in the mixed liquid are oxidized into sulfates. The solution at the upper part has an oxidation ratio of 93%, a density of 1.15 g/L, and a pH of 4.75. The solution at the lower part has an oxidation ratio of 92%, a density of 1.12 g/L, and a pH of 5.7.

The oxidation air 10 is delivered to the lower part of the oxidation system through a pipeline, and outlet gas of the oxidation system is delivered to the pre-washing section 4 of the absorber 1 and is used for agitating.

Process water 24 is replenished in the recirculation tank 22 of the fine particulate control section.

Practical operational parameters of raw flue gas 7 and clean flue gas 13 and quality parameters of the product ammonium sulfate can be seen in Tables 4-6.

The superficial gas velocity of the absorber 1 is 3.1 m/s;
the operational temperature of the pre-washing section 4 is 53°C;
the operational temperature of the absorption section 3 is 49°C; and
the operational temperature of the fine particulate control section 5 is 47°C.

### Effect Example 1

Flue gas in different working conditions is subject to ammonia desulfurization and de-dusting by using the apparatus and method of Example 1. Table 2 is operational parameters and test results in working condition 1; and Table 3 is operational parameters and test results in working condition 2.

**Table 2 Operational Parameters and Test Results in Working Condition 1**

| No. | Item | | Unit | Test Result | Notes |
|---|---|---|---|---|---|
| 1 | Amount of flue gas of integrated absorber | Normal conditions, wet-basis, actual O2 | ×104m3/h | 35.96 | - |
| | | Normal conditions, dry-basis, 6%O2 | ×104m3/h | 38.88 | - |
| 2 | System resistance | | Pa | 1021 | - |
| 3 | Parameters of raw flue gas | SO2 concentration (Normal conditions, dry-basis, 6%O2) | mg/Nm3 | 811.78 | Average during test |
| | | O2(V/V) | % | - | - |
| | | SO3 concentration | mg/Nm3 | 9.8 | Average during |
| | | (Normal conditions,, dry-basis, 6%O2) | | | test |
| | | Temperature | °C | 127.3 | Average during test |
| | | Moisture content (V/V) | % | 7.70 | - |
| | | Dust concentration (Normal conditions, dry-basis, 6%O2) | mg/Nm3 | 9.7 | - |
| 4 | Parameters of clean flue gas | SO2 concentration (s Normal conditions, dry-basis, 6%O2) | mg/Nm3 | 15.73 | Average during test |
| | | O2(V/V) | % | - | - |
| | | SO3 concentration (Normal conditions, dry-basis, 6%O2) | mg/Nm3 | 0.8 | Average during test |
| | | Temperature | °C | 47 | Average during test |
| | | Moisture content (V/V) | % | 14.23 | - |
| | | Dust concentration (Normal conditions, dry-basis, 6%O2) | mg/Nm3 | 1.9 | including solid particulates and soluble solid particulates |
| | | Slipped free ammonia (Normal conditions, dry-basis, 6%O2) | mg/Nm3 | 0.06 | - |
| | | Slipped ammonium salts (Normal conditions, dry-basis, 6%O2) | mg/Nm3 | 0.43 | - |
| 5 | Desulfurization efficiency of integrated absorber | | % | 98.05 | SO2 concentration of raw flue gas is lower than the |
| | | | | | designed value |
| 6 | Dedusting efficiency of integrated absorber | | % | 80.5 | - |
| 7 | SO3 removing efficiency of integrated absorber | | % | 91.8 | |
| 8 | Power consumption (excluding ammonium sulfate system) | | kWh/h | 882.1 | - |
| 9 | Ammonia consumption (anhydrous ammonia) | | t/h | 0.189 | Converted to anhydrous ammonia |
| 10 | Ammonia recovery | | % | 99.88 | - |
| 11 | Byproduct ammonium sulfate | Nitrogen content | % | 21.2 | |
| | | Moisture | % | 0.2 | - |
| | | Free acid content | % | 0.02 | - |

**Table 3 Operational Parameters and Test Results in Working Condition 2**

| No. | Section | Tested Item | | Unit | First Period | Second Period |
|---|---|---|---|---|---|---|
| 1 | Flue gas inlet | Temperature of flue gas | | °C | 110 | 120 |
| 2 | | Average flow rate of flue gas | | m/s | 11.2 | 11.5 |
| 3 | | Sectional area of duct | | m2 | 16 | 16 |
| 4 | | Full pressure | | kPa | 1.38 | 1.49 |
| 5 | | Moisture content of flue gas | | % | 7.5 | 7.5 |
| 6 | | dry flue gas under normal conditions | | m3/h | 4.67×105 | 4.56x105 |
| 7 | | Oxygen content | | % | 3.75 | 3.76 |
| 8 | | Dust | Measured discharge concentration | mg/m3 | 43.7 | 44.8 |
| 9 | | | Discharge rate | kg/h | 20.4 | 20.4 |
| 10 | | SO2 | Measured discharge concentration | mg/m3 | 2.97×103 | 2.98×103 |
| 11 | | | Discharge rate | kg/h | 1.39×103 | 1.36×103 |
| 12 | Flue gas outlet | Temperature of flue gas | | °C | 46 | 46 |
| 13 | | Sectional area of duct | | m2 | 13.2 | 13.2 |
| 14 | | Full pressure | | KPa | 0.03 | 0.04 |
| 15 | | Measured amount of flue gas | | m3/h | 6.46×105 | 6.32×103 |
| 16 | | dry flue gas flow rate under normal conditions | | m3/h | 4.74×105 | 4.64×103 |
| 17 | | Oxygen content of flue gas | | % | 3.93 | 3.94 |
| 18 | | Dust | discharge concentration at 6% oxygen | mg/m3 | 4.31 | 4.76 |
| 19 | | | Discharge rate | kg/h | 2.33 | 2.51 |
| 20 | | SO2 | discharge concentration at 6% oxygen | mg/m3 | 5.03 | 7.54 |
| 21 | | | Discharge rate | kg/h | 2.71 | 3.98 |
| 22 | | Ammonia | discharge concentration at 6% oxygen | mg/m3 | 0.250 | <0.235 |
| 23 | Desulfurization efficiency | | | % | 99.81 | 99.71 |
| 24 | Dedusting efficiency | | | % | 88.58 | 87.70 |
| 25 | Absorber pressure drop | | | kPa | 1.35 | 1.45 |

| | | | | | | |
|---|---|---|---|---|---|---|
| Note: the first period is the morning on May 18, 2016, and the second period is the afternoon on May 18, 2016. | | | | | | |

## Claims

1. A method and apparatus for effectively removing sulfur oxides and dust in gas by ammonia process, **characterized in that** the apparatus uses segmented control and multipoint ammonia-feeding process to fundamentally control ammonia slip and aerosol formation so as to achieve an effective effect of desulfurization and de-dusting; under the condition that the concentration of SO2 ≤ 30,000 mg/Nm3 and the concentration of total dust ≤ 50mg/Nm3 in raw flue gas, it can be realized, in the clean gas, that SO2 ≤ 35mg/Nm3, total dust (including aerosol) ≤ 5mg/Nm3, and ammonia slip ≤ 2mg/Nm3 ; the apparatus consists of a gas cleaning and pollutant removing system, an oxidation system, an ammonium sulfate post-treatment system, an ammonia supply system, and an auxiliary system;
the gas cleaning and pollutant removing system uses segmented control and is in principle divided into a pre-washing section, an absorption section, and a fine particulate control section, and each of the pre-washing section, the absorption section, and the fine particulate control section is provided with a plurality of spray layers, the pre-washing section concentrates a circulating washing liquid of the pre-washing section while reducing the temperature of flue gas, and the absorption section absorbs and removes sulfur dioxide in flue gas, controlling ammonia slip and aerosol formation in respective sections;
the gas cleaning and pollutant removing system uses multipoint ammonia-feeding and allows sufficient reaction to prevent ammonia slip and aerosol formation; an ammonia-containing desulfurizing agent is added from a plurality of points, including the upper layer, the intermediate layer, and the lower layer of an oxidation tank in the oxidation system or an absorption recirculation tank, the pre-washing section, absorption spray layers, and inlets and outlets of respective recirculation pumps;
the oxidation tank in the oxidation system is layered according to the requirement for segmented control, the replenishing liquid of the pre-washing section and an absorption circulation liquid are withdrawn from different positions of the oxidation tank, and 2 to 8 layers of gas-liquid dispersion enhancers are provided in the oxidation tank so as to both ensure absorption efficiency and control ammonia slip and aerosol formation;
the process flow used by the apparatus is as follows:
flue gas enters from a pre-washing section and is cooled and washed by a circulating washing liquid of the pre-washing section, while the circulating washing liquid is concentrated and the flue gas is further passed through an absorption section for desulfurization by washing with absorption circulation liquid and a fine particulate control section for removing fine particulates by a fine particulate circulating washing liquid respectively and is then discharged;
the circulating washing liquid of the pre-washing section is replenished from an absorption circulation liquid, the absorption circulation liquid is replenished from a circulating washing liquid of the fine particulate control section, and process water is mainly replenished from the fine particulate control section;
the absorption circulation liquid is oxidized in the oxidation system, and solutions having different oxidation ratios are withdrawn from different positions of the oxidation tank for circulating absorption;
the circulating washing liquid of the pre-washing section is concentrated (crystallized) in the pre-washing section or is subject to evaporative crystallization outside the absorber, and is processed into a commercial ammonium sulfate by an ammonium sulfate post-treatment system; an integrated drying tower is used to directly produce ammonium sulfate from a part of the absorption liquid when it is required to control harmful ions such as chloride, fluoride, and the like in the solution.

2. The method and apparatus according to claim 1, **characterized in that** the fine particulate control section is provided with demisters, each layer of the pre-washing section and the absorption section is provided with demisters as needed; and the demister employs a form of baffle plate, ridge, packing, or wire mesh, or a combined form thereof.

3. The method and apparatus according to claim 1, **characterized in that** a mixing structure or apparatus may be provided at each ammonia-feeding point and, when anhydrous ammonia is directly added to a solution, a mixer exclusively used for anhydrous ammonia is provided to achieve multipoint ammonia-feeding, sufficient reaction and preventing ammonia slip and aerosol formation; the absorption circulation liquid of the absorption section has a pH value greater than 4.6; the circulating washing liquid of the pre-washing section has a pH value less than 5.5 for a crystallization process inside the absorber, and a pH value less than 6 for crystallization process outside the absorber.

4. The method and apparatus according to claim 1, **characterized in that** from 2 to 8 layers of gas-liquid dispersion enhancers are provided in an oxidation tank, and the gas-liquid dispersion enhancer may employ a form of any one of structured packing, random packing, perforated plate, bubble cap, aeration head, and the like or a combined form thereof; the liquid level of the oxidation tank is greater than 5 m, oxidizing air is excessive by 20% or more, the net residence time of the solution is greater than 20 minutes, the oxidation ratio of the absorption circulation liquid is greater than 90%, and the oxidation ratio of the circulating washing liquid of the pre-washing section is greater than 92%.

5. The method and apparatus according to claim 1, **characterized in that** the liquid-to-gas ratio of each layer of the absorption section is no less than 0.2 L/m3, and the spray coverage is no less than 110%; the liquid-to-gas ratio of each layer of the fine particulate control section is no less than 0.1 L/m3, and the spray coverage is no less than 100%.

6. The method and apparatus according to claim 1, **characterized in that** the superficial gas velocity of the absorber is 1 m/s to 5 m/s;
and/or the operational temperature of the pre-washing section is 35°C to 80°C; and/or the operational temperature of the absorption section is 30°C to 70°C. and/or the operational temperature of the fine particulate control section is 30°C to 65°C.
